(19) Europäisches Patentamt
European Patent Office
Office européen des brevets

(11) EP 2 816 773 B1

(12) EUROPEAN PATENT SPECIFICATION

(45) Date of publication and mention
of the grant of the patent:
03.10.2018 Bulletin 2018/40

(51) Int Cl.:
H04L 29/06 (2006.01)    G06F 21/57 (2013.01)

(21) Application number: 13290145.5

(22) Date of filing: 18.06.2013

(54) **Method for calculating and analysing risks and corresponding device**

Verfahren zur Berechnung und Analyse von Risiken und zugehörige Vorrichtung

Procédé de calcul et d'analyse de risques et dispositif correspondant

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(43) Date of publication of application:
24.12.2014 Bulletin 2014/52

(73) Proprietor: Alcatel Lucent
91620 Nozay (FR)

(72) Inventors:
• Kanoun, Wael
91620 Nozay (FR)
• Papillon, Serge
91620 Nozay (FR)

(74) Representative: Berthier, Karine
Alcatel-Lucent International
Patent Business
Site Nokia Paris Saclay
Route de Villejust
91620 Nozay (FR)

(56) References cited:
EP-A2- 1 768 043    US-A1- 2009 077 666

## Description

BACKGROUND OF THE INVENTION

The present invention relates to the field of protection of an information system allowing the management of security policies in function of risks calculated.

The invention also relates to a corresponding device for carrying the steps of a method for risks calculation and analysis according to the invention.

Nowadays, organizations rely on ICT systems, ICT being the acronym for Information and Communications Technology.

Infrastructures of these ICT systems need to be protected from harmful attacks consisting of malicious events such as intrusions, data thefts, viruses or worms... due to a proliferation of cyber attacks with exacerbating effects, while new vulnerabilities are discovered and published.

In order to thwart these emerging cyber-threats, security actions and policies are implemented, generally based on a risk analysis and for example also on available resources/budgets. The risk analysis is realized inter-alias thanks to vulnerabilities information known and stored for example in a public database and collected information on the network, such as the topology and services information, to determine the vulnerabilities which might be indeed exploited by an attacker.

The known risk analysis generally provide information on a low-level point of view, that mean on the technical aspects, such as the system topology, technical vulnerabilities, firewall configuration, etc..., which are primordial factors for the exposition of the system and the associated risks.

However, there is no high level consideration of the organization priorities, nor of the risks that threaten the organization business and activities, such risks are hereafter called high level risks or business risks.

It is known for example to implement a risk management method, from the building of attack paths up to the evaluation of risks, allowing to evaluate and comparing the risks with respect basically to a single criterion, here the vulnerabilities, and also allowing to prioritize the vulnerabilities in order to prioritize fixes for the vulnerabilities as disclosed in document EP 1768043 or US 2009/077666.

However, it is not allowed to evaluate and compare other notions for making security decisions, such as entry points of the attack paths, supporting assets on which rely primary assets of the organization for high level services such as banking services in a financial organization, countermeasures like firewall rules, etc.

This is a major limitation for security officers who need a full situation awareness for efficient decision making.

The problem resides in the huge gap between high level / business risks, and the technical ICT system state such as the vulnerabilities, or the network topology in an organization. The security officers lack comparison tools that would enable them to decide which security decision is best for the company due to the high level risks on the business activities. The security decision may also be made in terms of mid to long term investments, as well as immediate reactions when facing a cyber-attack.

Moreover, in the highly dynamic ICT systems, risk analysis must be continuously updated, taking into account particularly the latest discovered vulnerabilities, the system state, etc.

It is thus needed a tool enabling to analyse and update the risk of the ICT system efficiently and accurately.

SUMMARY OF THE INVENTION

One object of the present invention is therefore to overcome at least partially the drawbacks of the state of the art previously cited and offer a method that allows to fill the gap between high level / business risks, and the technical ICT system state such as the vulnerabilities, or the network topology in an organization.

The invention is defined in the independent claims 1 and 11. This is achieved by a method for calculating and analysing risks in an information system infrastructure of a network, said network comprising a plurality of nodes, said nodes comprising supporting assets on which rely one or more primary assets, wherein said method comprises the steps of:

- generating at least one attack path, each generated attack path being a sequence of edges connecting nodes from one entry node to one exit node, the exit node being a supporting asset of said system,
- evaluating the impact of detrimental events linked to primary assets which rely on one or more supporting assets,

wherein:

- for each attack path, modelling an elementary risk as a potential scenario linking the supporting asset to which leads the attack path with a primary asset relying on said supporting asset and one detrimental event affecting said primary asset,

- specifying one or more search criteria for the risk calculation, said criteria being any information available from information associated to elementary risks or any criteria allowing to select a subset of elementary risks,
- selecting one or more elementary risks relevant to the specified criteria, and
- evaluating a composite risk regarding the specified criteria based on characteristics of the selected relevant elementary risk(s).

Thus, using attack paths which depict attack scenarios and using detrimental events stored, "elementary risks" of the system may be derived defining potential attack scenarios leading to supporting assets on which rely primary assets and therefore inducing detrimental events in the organization on the associated primary assets. The concerned assets and finally the concerned detrimental events are established at the overall organization level.

Finally, according to the security officer needs, said method derives the high level risks from the subset of evaluated elementary risks based on one or more criteria specified by the security officer. A high level risk is calculated across the entirety of the ICT system.

The results may then be presented to the security officer who can interpret directly the high level risks without having to ask a technical administrator the link between an attacked machine and the potential high level risks for the business activities.

Security officers would then be able to compare the relative importance of criteria, such as vulnerabilities, assets, countermeasures, entry points, as well as business risks.

According to an aspect of the invention, said method may comprise a step of calculating the likelihood for each elementary risk based on the likelihood of occurrence of the associated attack path.

Said method may further comprise the steps of:

- determining the nature of the technical impact for each elementary risk based on:

  • the technical impact of the associated attack path corresponding to the nature of the technical consequence relating to the confidentiality, the integrity or the availability of the information system, and on
  • the nature of impact of the associated detrimental event relating to the confidentiality, the integrity or the availability of the information system,

- retaining the elementary risks wherein the technical impact of the associated attack path has the same nature than the impact of the associated detrimental event.

Said method may further comprise a step of clustering the selected relevant elementary risk(s) in one cluster per each detrimental event.

Each elementary risk may be evaluated: its likelihood, its nature of consequences, such as loss in confidentiality, integrity, or availability. This evaluation is used to define the composite risk.

In a preferred example, said method may comprise a step of defining for each cluster:

- the likelihood based on the likelihood of the elementary risks of the cluster, for example the likelihood of a cluster may be the maximum value of the likelihood of an attack path in the cluster, and
- an impact parameter based on the impact of the associated detrimental event.

The composite risk may be defined as the couples of likelihood and impact parameter of the clusters of relevant elementary risks.

According to another aspect of the invention, said method comprises a step of assessing the composite risk by computing priority metrics for each cluster, each priority metric depending on the likelihood and impact parameter for the associated cluster.

For each cluster the priority metric may be obtained by combining the likelihood and impact parameter of the cluster, for example by crossing with two-dimension matrix or by multiplying the likelihood and impact parameter of the cluster.

The composite risk assessed thanks to the priority metrics of the elementary risks of the clusters may then be presented to the security officer who might interpret easily the "high level" risk for the specified criterion or criteria.

Moreover, the priority metrics may be defined as words, the words being even more meaningful for the security officer.

The priority metrics may be ordered, for example ascending or descending.

At least two composite risks or assessed composite risks may be evaluated according to two different specified criteria, said method further comprising a step of comparing the composite risks or assessed composite risks with each other in order to prioritize the composite risks or assessed composite risks.

The invention also relates to a corresponding device for carrying out the steps of such a method for calculating and analysing risks in an information system infrastructure of a network, said network comprising a plurality of nodes, said nodes comprising supporting assets on which rely one or more primary assets, said device comprising at least one processing means for:

- generating at least one attack path, each generated attack path being a sequence of edges connecting nodes from one entry node to one exit node, the exit node being a supporting asset of said system,
- evaluating the impact of detrimental events linked to primary assets which rely on one or more supporting assets,

wherein said device further comprises at least one processing means for:

- modelling for each attack path an elementary risk as a potential scenario linking the supporting asset to which leads the attack path with a primary asset relying on said supporting asset and one detrimental event affecting said primary asset,
- specifying one or more search criteria for the risk calculation, said criteria being any information available from information associated to elementary risks or any criteria allowing to select a subset of elementary risks,
- selecting one or more elementary risks relevant to the specified criteria, and
- evaluating a composite risk regarding the specified criteria based on characteristics of the selected relevant elementary risk(s).

According to one embodiment, said device comprises an attack graph generation module for generating an attack graph based on specified entry nodes and exit nodes and an attack graph dissociation module able to dissociate the attack graph generated by the module into one or more attack paths.

Said device may comprise at least one processing means for calculating the likelihood occurrence of each attack path.

According to an aspect of the invention, said at least one processing means for calculating the likelihood occurrence of each attack path is able to calculate the likelihood of occurrence of each elementary risk.

Said device may comprise at least one processing means for evaluating the technical impact incurred at the exit node of an attack path according to consequences on the exit node relating to the confidentiality, the integrity or the availability of the system.

According to an embodiment, said at least one processing means for modelling for each attack path an elementary risk is able to determine at least one impact parameter of the elementary risk based on the technical impact of the associated attack path and on the impact of the associated detrimental event.

Said device may further comprise at least one processing means for clustering the relevant elementary risks regarding specified criteria according to the detrimental events.

Said device may further comprise at least one processing means for assessing the composite risks by computing priority metrics for each cluster, each priority metric depending on the likelihood and impact parameter for the associated cluster, for example by combining the likelihood and impact parameter of the cluster.

BRIEF DESCRIPTION OF THE DRAWINGS

Some embodiments of device and/or methods in accordance with embodiments of the present invention are now described, by way of illustrative and non limiting example, and with reference to the accompanying drawings, in which:

- figure 1 is a synoptic diagram of the different steps of a method for risk calculation and analysis;
- figure 2 schematically illustrates an attack path;
- figure 3 schematically illustrates steps of an embodiment for calculating the likelihood for an attack path, according to the invention;
- figure 4 schematically illustrates a database for storing for each supporting asset a primary asset and associated detrimental events;
- figure 5 schematically illustrates an elementary risk modelled according to the invention;
- figure 6 schematically illustrates an example of a data repository model for storing elementary risks of figure 5;
- figure 7 schematically illustrates steps for determining risks given one or several criteria;
- figure 8 schematically illustrates relevant elementary risks according to one or more specified criteria and clustered in accordance with the detrimental events;
- figure 9 schematically illustrates steps of comparing assessed composite risks modelled according to different criteria, and

- figure 10 schematically illustrates a device for carrying out the method previously mentioned, according to a not limited embodiment of the invention.

## DETAILED DESCRIPTION OF THE INVENTION

### Terminology

As used herein, the term "attack" refers to a single event or a serie of events in a system that transgresses the normal authorized usage of the system or exploits deliberately or accidentally a vulnerability in the system as for example a network scanning, a password cracking, a sending of malicious email (also called spam), a sending of a malformed internet protocol (IP) packet...

As used herein, the term "IP" refers to the acronym Internet protocol.

As used herein, the term "GUI" refers to the acronym graphic user interface.

As used herein, the term "ICT" refers to the acronym Information Communication Technology.

The invention relates to the field of ICT system protection in a network and more precisely to a method for risks calculation and analysis allowing a security officer to manage, make decision in function of the potential attacks and their "high level" risks, that means the business risks for the organization, more precisely for the business activities.

A network comprises a plurality of nodes.

A node is an active electronic device attached to the network, capable of sending, receiving or forwarding information over a communication channel. A node is either a connection point, either a redistribution point, or a communication endpoint, that is to say some terminal equipment. Modems, switches, routers, workstations, servers, database telephone handsets or printers are example of nodes.

Some of these nodes are connected in pairs by edges. In other words, an edge, also called a link, is a connection, physical or logical, between two nodes.

These nodes form supporting assets permitting primary assets, also called assets, to function properly. Supporting assets may also be used for stocking important information.

Each primary asset may rely on one or several supporting assets (machines, databases, servers, etc...). As an example in a non limited way, for a financial organization, the primary assets may be EBanking (for Internet Banking or Online Banking), or other banking service or trading.

Thus, primary assets also called assets relate to business process, services, information, whereas supporting assets, e.g. machines, routers, servers, databases, provide the physical support for the primary assets.

Some of the nodes or supporting assets when destroyed, degraded or otherwise rendered unavailable, would affect the reliability or operability of the network, or cause damages (e.g. financial damages, such as bank card fraud or data leak such as confidential data leak) to the entity exploiting a system, also called ICT system in the network.

Such event affecting the reliability or operability of the network or causing a damage is called a detrimental event.

### Method

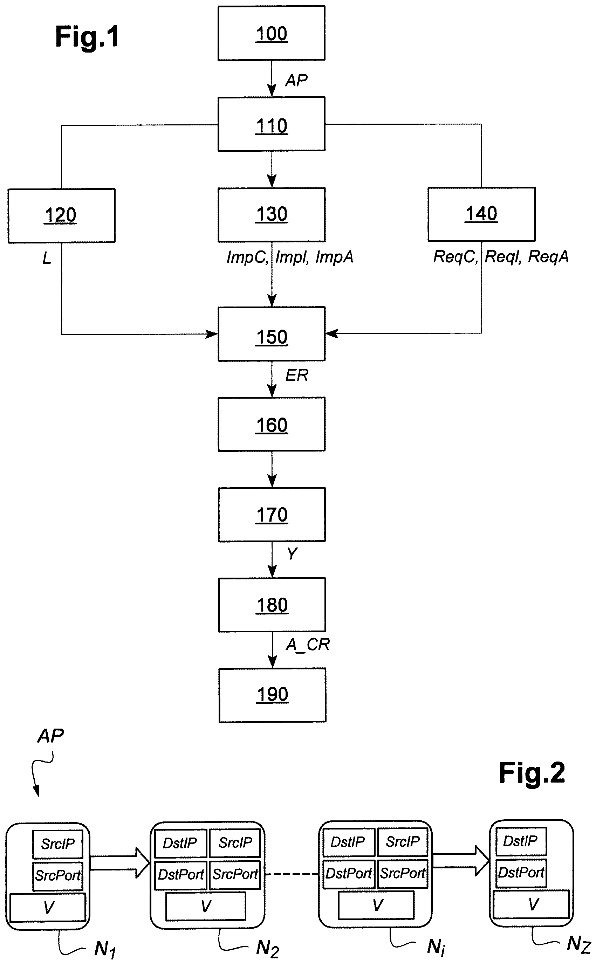

Figure 1 represents the general steps of the method for risk calculation and analysis for helping the security supervision.

Step 100 refers to the generation of attack paths *AP*. An attack path *AP* is a sequence of successive edges connecting nodes.

For that, an attack graph may first be generated. Attack graphs are classically used in security supervision. The attack graph may be generated using one of existing algorithms from the state of the art and will not be described in detail hereafter. The attack graphs may be generated earlier to the implementation of the method according to the invention.

The attack graph may be generated using relevant information of the system, such as the network topology, the machines and servers inventory of the system, logical connections, etc. and also using vulnerabilities-related information of the system such as: prerequisites and/or consequences of a successful vulnerability information, its complexity, a need for authentication, etc.

An attack graph depicts ways in which an adversary, also called attacker, can exploit vulnerabilities of the network to break into the system, that is to say ways in which the system can be compromised.

An attack graph visually shows entry points (some nodes of the network) into the network, and the paths available from said entry points to exit points (other nodes of the network). The exit nodes are here supporting assets, also called target supporting assets of the ICT system.

Step 100 may comprise a sub-step wherein the entry points and target supporting assets of the system are identified. A security officer, such as an administrator, a high level manager of the organization or any decision maker in the organization, may identify the entry and exit points.

An attack graph depicts potential attack scenarios that an attacker can follow in order to launch an attack and penetrate the system, starting from an entry point and ending at a target supporting asset. In other words the attack graph represents all relevant attack paths *AP* in the system.

An attack graph can be dissociated into a set of attack paths, an attack path being a path from an entry point to an exit point being the target supporting asset. Each attack path represents a single attack scenario, in which one or several vulnerabilities are exploited on one or several machines in order to reach a target supporting asset.

Figure 2 schematically illustrates an example of an attack path *AP* from an entry point or entry node $N_1$ to an exit point or exit node $N_z$. A same node $N_i$ (*i* being a natural number from 1 to the number *z* of nodes in the attack path *AP*) may occur one or several times along an attack path *AP*.

According to the described embodiment, each node $N_i$ across said attack path *AP* is associated with the following data:

- vulnerabilities *V* of the ICT system exploited by the attacker,
- ingress connection information from a previous node $N_{i-1}$,
- egress connection information toward the next node $N_{i+1}$.

The same vulnerability *V* may occur several times on different nodes.

Connection information may be:

- an Internet Protocol (IP) address *Src IP, Dst IP* for the source and destination IP addresses, or a list of IP addresses,
- a port *Src Port, Dst Port* for the source and destination ports, or a range of ports,
- or any other data contained in a frame.

Moreover, additional data can be associated to edges, for example the used protocol or a list of protocols.

Referring again to figure 1, the method may comprise a step 110 for storing in a data repository of the generated attack paths *AP*, each attack path *AP* being the succession of the exploitation of several vulnerabilities *V*, on one or several machines of the ICT system, that reaches a supporting asset which if attacked could provoke a detrimental event.

The method may also comprise a step 120 for the likelihood computation for an attack path, that is to say calculating the likelihood of occurrence of each single attack path *AP*.

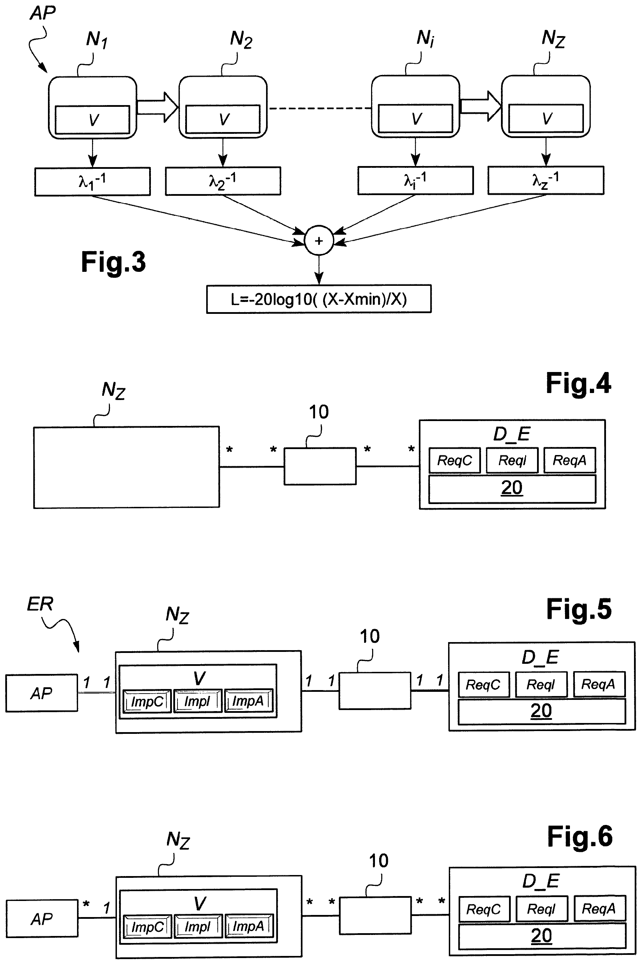

For that, referring to figure 3, a "Difficulty" score per node may be computed. For each node $N_i$ in the attack path *AP*, the "Difficulty" score obtained is named here $\lambda_i$.

The computation is based on several parameters for each vulnerability *V* in the attack path, such as prerequisites and/or consequences of a successful vulnerability information, need for authentication, its complexity, etc... Such parameters can be found in a vulnerability database providing publicly known information-security vulnerabilities and exposures, for example in public databases e.g.:

- CVE Database (CVE being the acronym for Common Vulnerabilities and Exposures) or NIST-CVE database (NIST being the acronym for the National Institute of Standards and Technology of the United States), or
- CVSS database (CVSS being the acronym for Common Vulnerability Scoring System) or
- OSVD for open sourced vulnerability database.

Of course, any other source for such vulnerabilities information may be used.

Among all metrics available on the vulnerability database such as CVE or CVSS database, only necessary metrics are used for computing the likelihood of occurrence of a single attack path.

The parameters may be one or combinations of several metrics in the following list: access vector, access complexity, authentication, exploitability, report confidence.

The access vector metric generally shows how a vulnerability may be exploited, for example if the attacker must either have physical access to the system or a local account.

The access complexity metric generally describes how easy or difficult it is to exploit the discovered vulnerability.

The authentication metric refers to a need of authentication or the number of times that an attacker must authenticate in order to be able to exploit the target node.

The exploitability metric generally describes the current state of exploitation techniques or automated exploitation code, for example if no exploit code has been found and the attack is only theoretic, or if the vulnerability can be exploited by automated code, including mobile code such as a virus.

The report confidence metric generally relates to the level of confidence in the existence of the vulnerability and also the credibility of the technical details of the vulnerability.

For example the vulnerabilities parameters previously cited may be multiplied with each other. As an example in a non limiting way, the product obtained by multiplying may be rounded, for example rounded to one decimal, or rounded to the nearest hundredth.

Then addition of these difficulty metrics may be performed for all nodes along a single attack path *AP*. According to a particular embodiment, the inverse of the difficulty scores $\lambda_i^{-1}$ are summed. The sum is here named *X*.

The likelihood may then be obtained with a logarithmic scaling of the ratio of the sum *X* minus the smallest possible value for the sum *X*, here called *Xmin*, over the sum *X*.

More precisely, *Xmin* is a theoretical minimum value of the sum *X*, which can be calculated by considering an attack path *AP* that contains only one node which metric has the theoretical maximum value, for example is equal to 1.

The likelihood is here named *L* for an attack path *AP*.

An example of an associated algorithm in a simplified language is given hereafter:

*For each attack path*
*For each node i in the attack path*

$$\lambda_i = Access\ Vector\ x\ Access\ Complexity\ x\ Authentication\ x\ Exploitability\ x\ Report\ Confidence$$

$$X = \Sigma\ \lambda_i^{-1}$$

$$L = -20\,log10\left(\frac{X-Xmin}{X}\right)$$

Back to figure 1, the method may further comprise a step 130 for the evaluation for each attack path *AP* of the technical impact at the exit node, that is to say the target supporting asset to which the attack path *AP* leads.

The nature and the extent of the impact depend on the consequences of the exploitation of the last vulnerability *V* in the target supporting asset (i.e. exit node of the attack path), that means here the nature of the impact comprises for example confidentiality impact, integrity impact or availability impact on the system. Vulnerabilities-related information stored in a vulnerability database such as a public database (CVSS, CVE) are thus needed.

Regarding the confidentiality of data on or processed by the system, information may be provided to know for example if there is no impact on the confidentiality of the system, if there is few or considerable or even total disclosure of information, so that some or almost or even all the data is available for the attacker.

Regarding the integrity of the system, information may be provided to know if no or limited modification of some data or system files is possible or even if there is a total loss of integrity so that the attacker can modify any files or information on the target system.

Regarding the availability of the system, information may be provided to know if the attack consumes network bandwidth, processor cycles, memory or any other resources, thus reducing or not the performance of the system.

The three impact metrics *ImpC* for confidentiality, *ImpI* for integrity, and *ImpA* for availability corresponding here to the nature of the impact can be calculated, based on information from vulnerability databases such as public databases (CVE or CVSS).

In the following example the three impact metrics *ImpC, ImpI, ImpA,* are calculated based on information provided by CVSS database.

The impact on confidentiality metric obtained from CVSS database is hereafter named $CVSS\_ImpC_{Vulnerability\ C}$. The impact on integrity metric obtained from CVSS database is hereafter named $CVSS\_ImpI_{Vulnerability\ I}$. The impact on availability metric obtained from CVSS database is hereafter named $CVSS\_ImpA_{Vulnerability\ A}$.

An example of an associated algorithm for evaluating, for an attack path *AP,* the three impacts on confidentiality, integrity or availability in a simplified language is given hereafter:

- *ImpC = 1 if CVSS_ImpC$_{Vulnerability\ C}$ > 0 or V.PonstCondition.privelege = root*
- *ImpI = 1 if CVSS_ImpI$_{Vulnerability\ I}$ > 0 or V.PonstCondition.privelege = root*
- *ImpA = 1 if CVSS_ImpA$_{Vulnerability\ A}$ > 0 or V.PonstCondition.privelege = root*

wherein *"V.PonstCondition.privelege = root"* means that a successful exploitation of vulnerability *V* grants "root" access to the compromised machine.

Thus, the impact *ImpC* for confidentiality is true (*ImpC* = 1) if in the vulnerability database the corresponding metric is positive or if a successful exploitation of vulnerability *V* grants "root" access to the compromised machine, with disclosure of information, so that some or almost or even all the data is available.

The impact *ImpI* for integrity is true (*ImpI* = 1) if in the vulnerability database the corresponding metric is positive or if a successful exploitation of vulnerability *V* grants "root" access to the compromised machine, allowing modification of some data or system file or even permitting the attacker to modify any files or information on the target system.

The impact *ImpA* for availability is true (*ImpA* = 1) if in the vulnerability database the corresponding metric is positive or if a successful exploitation of vulnerability *V* grants "root" access to the compromised machine, implying a loss of some functionality or even a total loss of the attacked resources.

Referring now to figures 1 and 4, step 140 refers to the evaluation of the impact of detrimental events linked to a primary asset relying on a supporting asset, here to a target supporting asset $N_z$ to which leads an attack path *AP*.

As explained before, each attack path *AP* leads to a supporting asset $N_z$, and therefore potentially harms or disturbs one or more primary assets 10 which rely on this supporting asset $N_z$.

Each primary asset or asset 10 can be affected by one or several detrimental events *D_E*.

Also, a detrimental event *D_E* may affect one or more primary assets 10.

The detrimental events occurring when a primary asset 10 supported by an attacked supporting asset may be achieved automatically based on previous attack models for example stored in a data repository.

For evaluating the impact of a detrimental event *D_E* affecting a primary asset 10, the following properties may be checked:

- if there is a violation of confidentiality,
- if there is a violation of integrity,
- if there is a violation of availability.

These parameters thus tell about the nature of the impact of the detrimental event, that means affecting the confidentiality, integrity and/or availability of the system. The nature of the impact of the detrimental event may be in this example a confidentiality impact, an integrity impact or an availability impact.

Then, each detrimental event *D_E* may be associated with the nature impact parameters *ReqC* for violation of confidentiality, *ReqI* for violation of integrity, *ReqA* for violation of availability.

The detrimental event *D_E* may also be associated with a parameter 20 relating to the magnitude of the impact, it may be a qualitative parameter such as: minor, major, catastrophic, and/or a quantitative parameter e.g. monetary parameter.

The relation between a supporting asset $N_z$, (primary) asset 10, and the detrimental events *D_E* and their associated parameters may then be stored in an associated database, as schematically illustrated on figure 4. The symbols * mean that there may be one or more supporting assets $N_z$ linked to one or more primary assets 10 linked to one or more detrimental events *D_E*.

Referring back to figure 1, step 150 refers to the modelling of an elementary risk *ER* for each attack path *AP*. An elementary risk *ER* is defined hereafter as a potential attack scenario, which leads to a supporting asset $N_z$, and consequently affects a primary asset 10, which therefore induces a detrimental event *D_E* in the organization or entity.

In the described embodiment, this modelling may be based on the previously computed likelihood *L* and technical impact *ImpC, ImpI, ImpA* at steps 120 and 130 for an attack path *AP*. This modelling may also be based on the relation between a supporting asset $N_z$, primary asset 10 and detrimental events *D_E* determined at step 140.

Therefore, the modelling comprises a step of performing relation between each attack path *AP* with associated technical impact *ImpC, ImpI, ImpA* on a supporting asset $N_z$, a (primary) asset 10 affected and the detrimental events *D_E* and theirs parameters defined before. This is schematically represented on figure 5. This relation graph is stored as an elementary risk *ER*.

In figure 5, the cardinals "*1*" between two blocks, for example between an attack path *AP* and an exit node, here a supporting asset $N_z$, between the supporting asset $N_z$ and a primary asset 10, and between the primary asset 10 and a detrimental event *D_E*, mean that one elementary risk *ER* associates one attack path *AP* to one supporting asset $N_z$ to one primary asset 10 and finally to one detrimental event *D_E*.

As an illustrative and not limiting example, an elementary risk *ER* for example in a financial organization can be defined as a scenario linking a given attack path *AP* to the supporting asset $N_z$ to which leads the attack path *AP*, this supporting asset $N_z$ being for instance a server with confidential banking data, this server is also associated with an asset relying on the server, in this example, a banking service of credit card, and this asset is also linked to a detrimental event that can occur if the asset is reached, for instance the detrimental event may be stealing of all confidential banking data.

The likelihood occurrence of the elementary risk may be calculated. For example, the likelihood of the elementary risk may be defined as equal to the likelihood for an attack path *AP* computed at step 120.

The impact of the elementary risk may also be determined taking into account the technical impact *ImpC, ImpI* and *ImpA* for the attack path *AP* defined at step 130 and the nature of the impact *ReqC, ReqI* and *ReqA* of the detrimental event *D_E* evaluated at step 140.

A corresponding algorithm in a simplified language is thus:

$$ER.Impact = [ (ImpC\ AND\ ReqC)\ OR\ (ImpI\ AND\ ReqI)\ OR\ (ImpA\ AND\ ReqA) ]\ x$$
$$ER.D\_E.Impact$$

wherein:

- *ImpC* is the technical impact relating to confidentiality of the vulnerability affected the supporting asset of the elementary risk *ER* in object,
- *ReqC* is the impact relating to confidentiality of the detrimental event associated to the elementary risk *ER* in object,
- *ImpI* is the technical impact relating to integrity of the vulnerability affected the supporting asset of the elementary risk *ER* in object,
- *ReqI* is the impact relating to integrity of the detrimental event associated to the elementary risk *ER* in object,
- *ImpA* is the technical impact relating to availability of the vulnerability affected the supporting asset of the elementary risk *ER* in object,
- *ReqA* is the impact relating to availability of the detrimental event associated to the elementary risk *ER* in object,
- *ER.D.Impact* is the impact of the detrimental event associated to the elementary risk *ER* in object.

Thus if one of the following conditions is true:

- *ImpC* AND *ReqC,* meaning the technical impact for the attack path *AP* has a confidential nature and that the detrimental event leads to a violation of confidentiality,
- *ImpI* AND *ReqI,* meaning the technical impact for the attack path *AP* has an integrity nature and that the detrimental event leads to a violation of integrity, or
- *ImpA* AND *ReqA,* meaning the technical impact for the attack path *AP* has an evailability nature and that the detrimental event leads to a violation of availability, the impact of the elementary risk *ER* is equal to the impact of the detrimental event *D_E.*

Therefore, for each elementary risk *ER,* the impact is retained when the technical impact *ImpC, ImpI, ImpA* evaluated for the attack path *AP* has the same nature than the impact *ReqC, ReqI, ReqA,* determined for the detrimental event associated to the asset relying on the supporting asset attacked.

Further, a set of elementary risks *ER* may be generated.

The elementary risks thus fill the gap between the technical support and the business organization, that means with such elementary risk *ER* the security officer may have information about risk for a business and not only technical information about risk on the machines.

As can be seen in figure 1, the method may further comprise a step 160 for storing in a data repository elementary risks with associated detrimental events, such data repository is called elementary risks database. Figure 6 schematically shows an example of the elementary risks database.

Moreover, a set of elementary risks *ER* may be stored in the associated elementary risks database, having for each supporting asset the technical impact evaluated, an associated asset, and the corresponding detrimental event with its nature and for example quantitative and/or qualitative properties of the impact of the detrimental event.

Back to figure 1, step 170 refers to the specification of one or more criteria *Y* for evaluating risks in the ICT system.

For example, the security officer of the organization or entity may indicate for example through a graphic user interface GUI on which criteria *Y* the security officer wants to calculate risks in the ICT system, relating to high level services, for example business risks.

The high level risk that is induced by any criteria *Y* is named here high level "composite risk".

The criteria *Y* may be: a vulnerability, a filtering rule, an entry point, an asset, a supporting asset, or any other criterion. In other words, the criteria *Y* may be any information available from the elementary risks *ER* modelled at step 150 and stored at step 160, or any other information that permits to select a subset of attack paths

Step 180 refers to the aggregation of a subset *S* of elementary risks *ER* in order to evaluate composite risks.

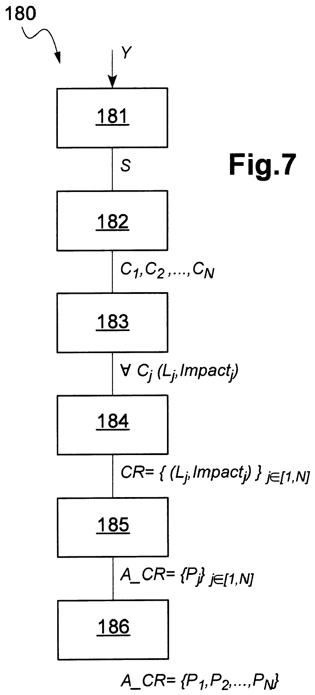

For that, at a sub-step 181, for a given criteria *Y,* a subset *S* of relevant elementary risks *ER* is extracted, as schematically represented on figure 7. The subset *S* of relevant elementary risks *ER* may be extracted from an elementary risks database.

Illustrative examples in a non limited way are given hereafter:

- if the criterion *Y* is a given vulnerability *V*, all the elementary risks *ER* that contain in their attack path *AP* at least one occurrence of said vulnerability *V*, are extracted ;
- if the criterion *Y* is a given supporting asset, all the elementary risks *ER* which attack path *AP* leads to said given supporting asset, are extracted;
- if the criterion *Y* is an entry point also called entry node all the elementary risks *ER* which attack path *AP* starts from said given entry point, are extracted; - if the criterion *Y* is a filtering rule on a specific firewall, such a filtering rule may be defined through the ingress and egress connection information, then all elementary risks *ER* which attack path *AP* passes through said rule, are extracted;
- if the criterion *Y* is a detrimental event, all the elementary risks *ER* leading to said detrimental event, are extracted.

Of course the previous list of examples is not exhaustive.

To conclude, for any criterion *Y* available from an elementary risk *ER*, all the elementary risks *ER* which are relevant to this specified criterion *Y* are extracted. More generally, any criterion *Y* which enable the selection of a subset of all relevant elementary risks *ER*, can be employed.

Moreover, a subset *S* of elementary risks *ER* that satisfy multiple and complex criteria *Y* expressed for example as a Boolean expression, may be extracted.

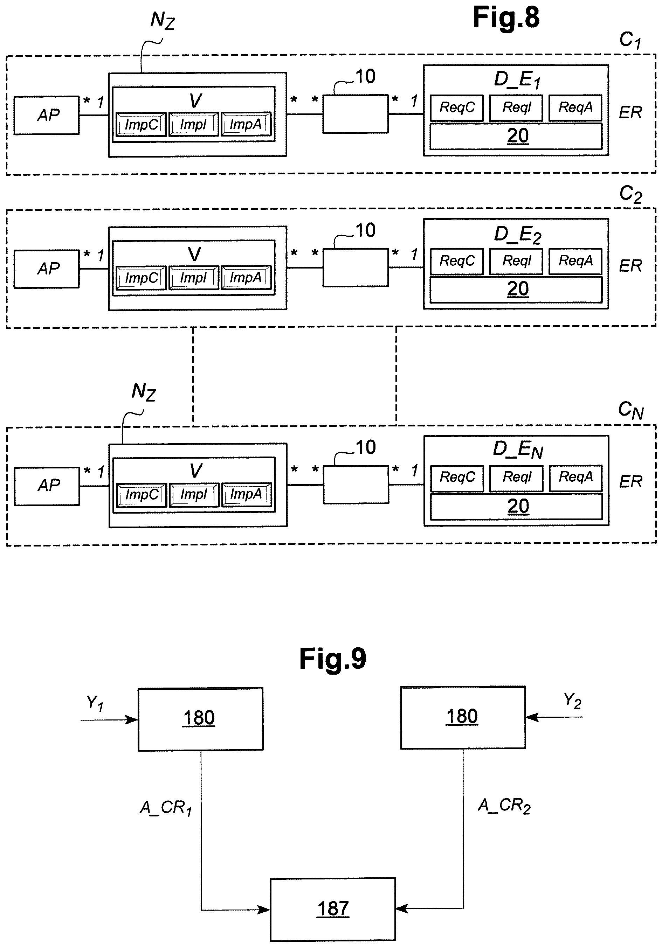

Once the subset *S* of elementary risks *ER* relevant to a single or multiple criteria *Y* is extracted, the elementary risks *ER* may be clustered at sub-step 182 (figure 8).

The elementary risks *ER* are here clustered with respect to the detrimental events. That means one cluster $C_1$, $C_2$, ...,$C_N$ of relevant elementary risks ER is obtained per each detrimental event $D\_E_1$, $D\_E_2$,...,$D\_E_N$. The cardinal "*1*" in front of the detrimental event $D\_E_1$, $D\_E_2$,...,$D\_E_N$ indicates that all elementary risks *ER* of one cluster $C_1$, $C_2$, ...,$C_N$ share the same detrimental event $D\_E_1$, $D\_E_2$,...,$D\_E_N$. *N* is here the natural number of detrimental events of the relevant elementary risks extracted for the given criteria, and is thus the number of clusters.

Then using the clusters $C_1$, $C_2$,...,$C_N$ of elementary risks ER, composite risks *CR* may be instantiated.

As an example, first for each cluster $C_j$ (*j* being a natural number from 1 to the number *N* of clusters), the associated impact *Impact$_j$* may be determined at sub-step 183 (figure 7).

According to a solution, the nature of the impact *Impact$_j$* associated to the cluster $C_j$ is equal to the nature of the impact of the elementary risks *ER*, and consequently to the nature of the impact of the associated detrimental event $D\_E_j$.

So in a simplified algorithm language:

$$Impact_j = (Impact\ of\ ER\ in\ C_j) = (Impact\ of\ D\_E_j).$$

For each cluster $C_j$, the likelihood $L_j$ may also be determined, for example as being the maximum value of the likelihood of a k$^{th}$ attack path *AP* (*k* being a natural number from 1 to the number of attack paths *AP* in the cluster $C_j$).

$L_j = Max(L_k)$ wherein $L_k$ is the likelihood of the attack path *k* in the cluster $C_j$.

Of course, the likelihood of a cluster $C_j$ can be defined otherwise, for example by an average or a weighted average of the likelihood of all the attack paths in said cluster $C_j$.

The "composite risk" *CR* for the clusters $C_1$, ..., $C_N$ of the extracted elementary risks *ER* relevant to a criteria *Y*, may be defined at step 184 as couples of the likelihood and impact of each cluster.

In a simplified algorithm language:

$$CR = \{(L_j, Impact_j)\}_{j \in [1,N]} = \{(L_1, Impact_1)\ ;\ (L_2, Impact_2)\ ;\ ...\ (L_j, Impact_j)\ ;...\ ;\ (L_N, Impact_N)\}.$$

Thus, the composite risk *CR* highlights the potential detrimental events that might be incurred by one or more specified criteria *Y*, with its likelihood and potential impact.

The likelihood and impact previously determined for each cluster $C_j$ may also be combined to derive a metric parameter, here named priority metric $P_j$. Instead of having pairs of two values, one value may be obtained for each cluster.

The function to combine may be defined according to the risk management method wanted by the security officer. For example in a non limited way, the likelihood and impact may be multiplied with each other, or crossed together, as an example any traditional two-dimensional risk matrix can be used.

Such metric $P_j$ may be used to prioritize, sort or order the potential attacks. The Composite Risk *CR* may then be assessed at step 185 by the selected function:

$$A\_CR = \{P_j\}_{\ j\ \in\ [1,N]}.$$

This set can be sorted, for example ascending or descending at step 186.

Moreover, the priority metric $P_j$ may be words defining the state or level of the potentials attacks for each cluster of relevant attack paths. The words may for example be: critical, major, minor, and so on.

A semantic analysis of the words associated to the priority metrics $P_j$ may be performed to identify those having a higher priority. In this example "critical" has a higher priority than "major" which at its turn has a higher priority than "minor".

Hereafter is given a non limiting example of a sorted assessed composite risk $A\_CR$ wherein the priority metrics are words:

$$A\_CR = \{Critical,\ Critical,\ Major,\ minor,\ minor,\ minor\}$$

Optionally, multiple assessed composite risks $A\_CR$ may be compared at step 187 (figure 9) with each other. Several comparison methods can be implemented, for example: a lexicographic method or a lexicographic with equivalence method as explained below.

Of course any other method for comparing the assessed composite risks may be performed.

For example, considering a lexicographic method, the assessed composite risk $A\_CR_1$ or $A\_CR_2$ comprising most metrics with higher priority can be defined with a higher priority.

Thus in an associated simplified algorithm language:

$$if\ A\_CR_1 = \{Critical,\ Critical,\ Major,\ minor\}\ and$$

$$A\_CR_2 = \{Critical,\ Major,\ minor,\ minor,\ minor,\ minor,\ minor\}$$

$$then\ A\_CR_1 >\ A\_CR_2.$$

The first assessed composite risk $A\_CR_1$ computed according to a first criterion $Y_1$ is determined with a higher priority than a second assessed composite risk $A\_CR_2$ computed according to a second criteria $Y_2$, as it comprises more "critical" metrics than the second assessed composite risk $A\_CR_2$.

According to another example, considering a lexicographic with equivalence method, substitution can be made, for instance five "minor" metrics can be substituted with a one "major" metric.

Thus, in a simplified algorithm language:

$$if\ A\_CR_1 = \{Critical,\ Major,\ minor\}\ and$$

$$A\_CR_2 = \{Critical,\ Major,\ minor,\ minor,\ minor,\ minor,\ minor\}$$

$$then\ A\_CR_2 = \{Critical,\ Major,\ Major\}$$

$$and\ A\_CR_2 >\ A\_CR_1$$

Referring again to figure 1, at step 190 the composite risks $CR$, or assessed composite risks $A\_CR$ or the results of comparison between multiple composite risks or assessed composite risks may be displayed to the security officer for example on a user interface, such as a graphic user interface GUI.

These information on the composite risks may be easily interpreted by the security officer. The security officer can ask the question he wants through one or more specified criteria Y.

It is not simply a risk assessment at the technical level to identify if machines or servers are protected or not, but the modelling and assessment of composite risks make the link with the high level risks on business risks for the organization. As a non-limiting example, the previously described method allows to identify the risk of credit card fraud or manipulation of the stock market or trading fraud for a financial organization.

Furthermore, the method as detailed above allows to provide a dynamic modelling or assessments of the high level risks for the organization thanks to the attack path generation based on the latest discovered vulnerabilities and the detrimental events and impact business stored.

Of course, the order of the steps for performing the invention may vary without departing from the scope of the invention.

Furthermore, the method according to the invention may be implemented in a preferred embodiment through or together with a software program written in e.g. Very high speed integrated circuit Hardware Description Language (VHDL) or C, C++, Java or using another programming language, or implemented by one or more VHDL, C, C++, or Java processes or routines, or several software modules being executed on at least one hardware device.

## Device

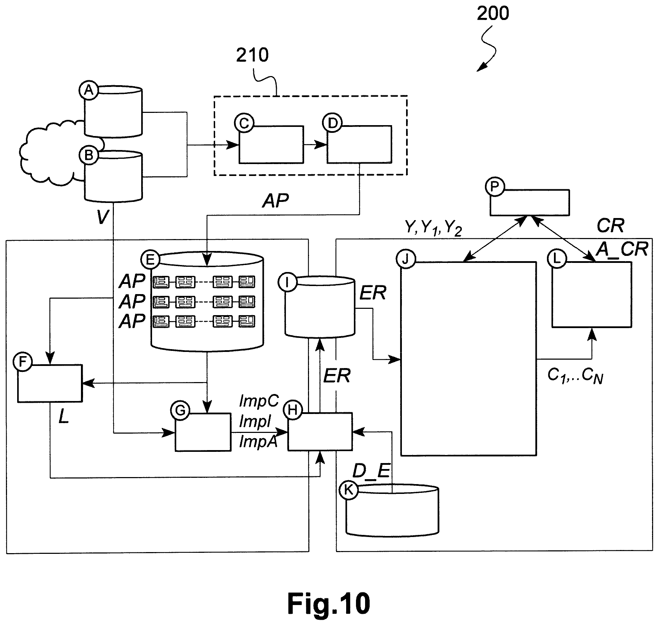

An embodiment of a device for carrying the method previously described is shown in figure 10.

The device 200 comprises one or more modules described hereafter comprising processing means for performing steps 100 to 190 of the method for risk calculation and analysis described above.

### Module A: ICT system Database

The device 200 comprises for example a module A which stores information about the ICT system such as: the network topology, logical connection, machines and servers inventory, etc.

This database may be used to generate attack graphs for the attack path generation at step 100.

### Module B: Vulnerability Database

The device 200 may also comprise a module B, such as a vulnerability database, storing vulnerabilities-related information.

The vulnerabilities-related information may be prerequisites or consequences of a successful vulnerability information, the complexity of the vulnerability, a need for authentication, etc.

Alternatively, the vulnerability database may be a public vulnerability database (e.g. NIST-CVE, OSVD, CVSS), which are continuously updated with the latest vulnerabilities-related information.

The vulnerability database B of the device 200 or the public vulnerability database may be used to generate attack graphs at step 100.

The vulnerability database B or the public one comprises for example the following metrics: access vector, access complexity, authentication, exploitability, report confidence, needed for computing the likelihood occurrence $L$ for an attack path $AP$ at step 120.

The vulnerability database B of the device 200 or the public vulnerability database may also be used for the technical impact evaluation at step 130.

### Module C: Attack Graph Generation module

The device 200 may further comprise a module C to generate attack graphs required at step 100 for the generation of attack paths. An attack graph represents all relevant attack paths in the system.

The module C may generate an attack graph using information stored in the module A, being in this example an ICT system database and the vulnerability database, such as information stored in the module B of the device 200 or in a public vulnerability database.

This module C may also perform at step 100 the generation of all the potential attack paths $AP$ between the entry points and target supporting assets.

### Module D: Attack Graph Dissociation module

The device 200 may comprise an attack graph dissociation module D for dissociating the attack graph, for example generated by the attack graph generation module C of the device 200, into attack paths $AP$. This module D is optional, and may be used if the module C generates attack graphs and does not generate attack paths. In the case where the module C generates attack paths, this module D is not needed.

This module D may perform at step 100 the generation of all the potential attack paths $AP$ between the entry points and target supporting assets.

The module D of the device 200 may then store the generated attack paths in an attack paths database.

The modules C and D may be part of an attack path generation means 210.

Module E: Attack Paths Database

The device 200 may further comprise a module E forming an attack paths database.

The attack path database is here a memory for storing a set of potential attack paths. In this attack paths database may be stored all the attack paths *AP* for example generated by the module D to reach identified target supporting assets from a set of specified possible entry points for attackers.

Therefore, this attack paths database E contains all the potential technical attack scenarios that can occur in the monitored system.

Moreover, the attack path database E may store associated information related to the attack paths, such as vulnerability parameters, ingress connection information from the previous node, egress connection information towards the next node, protocol used between nodes, etc... as schematically represented in figures 2 and 10.

Module F: Likelihood Calculator

The device 200 comprises a likelihood calculation module F for calculating as described at step 120 the likelihood of occurrence *L* of each single attack path *AP* stored for example in the attack paths database E.

This module F considers several parameters, such as metrics, for each vulnerability in the attack path, such as prerequisites and/or consequences of a successful vulnerability information, its complexity, a need for authentication, etc...

To found these parameters, the module F may use data stored in the vulnerability database B of the device 200 or public databases e.g. CVE or CVSS database.

As an example, the module F may use the following vulnerability-related metrics: access vector, access complexity, authentication, exploitability, report confidence, previously described.

Therefore, the module F may comprise selection means to select only the relevant metrics for the attack path likelihood calculation purpose.

The module F further comprises at least one computing means for calculating a "difficulty" score per node for each attack path, according to the previously selected relevant vulnerability-related metrics. The computing means may be able to multiply said relevant vulnerability-related metrics. The computing means may optionally be able to round the product obtained by multiplying.

Said at least one computing means may also be intended to sum difficulty metrics, for example to sum the inverse of the difficulty scores $\lambda_i^{-1}$. The sum is here named *X*.

The module F may also comprise at least one processing means for defining a theoretical minimum value of the sum *X*, named *Xmin*, as explained before.

The module F may further comprise at least one processing means for determining the likelihood *L* for the attack path basing on the difficulty scores, for example based on the sum *X* and on the theoretical minimum value *Xmin* of said sum *X*. Said processing means may be configured to calculate the likelihood *L* as the ratio of the sum *X* minus the theoretical minimum value *Xmin,* over the sum *X,* with a logarithmic scaling, for example according to the following equation:

$$L = -20 \, log10 \left( \frac{X - Xmin}{X} \right).$$

According to a preferred embodiment, the module F further comprises at least one processing means to calculate the likelihood occurrence of an elementary risk *ER* modelling at step 150. As said before the likelihood of an elementary *ER* may be considered equal to the likelihood *L* of the corresponding attack path *AP.*

Module G: technical impact evaluation module

The device 200 may further comprise a module G for calculating the technical impact of the exploitation of an attack path *AP* stored for example in the attack paths database E which leads to a supporting asset, also referred to as the target supporting asset.

More specifically, the module G may comprise at least one processing means for calculating the metrics *ImpC* for confidentiality, *ImpI* for integrity, *ImpA* for availability at step 130.

For that, the module G may use information stored on the vulnerability database B making part of the device 200 or being a public database.

Module K: Detrimental Events and Business Impact Database

The device 200 may also comprise a module K for storing one or several detrimental events, which impact the organization business when a primary asset relying on an attacked supporting asset is affected.

The detrimental events and business impact may be achieved automatically based on previous attack models stored in a data repository.

The detrimental event properties may be that there is violation of confidentiality, violation of integrity, or violation of availability. Information relating to the magnitude of the impact may also be stored, such as qualitative parameter (minor, major, catastrophic), or quantitative parameter (monetary). The database K thus stores the business impact associated to the detrimental event.

The database K further stores the relation between supporting assets, (primary) assets, and the detrimental events and their impact parameters determined at step 140.

Of course, a supporting asset may support several primary assets and a primary asset may rely on one or more supporting assets.

Moreover, a primary asset may induce several detrimental events in the organization and a detrimental event may affect one or several primary assets.

Module H: elementary risk modelling module

The device 200 further comprises a module H to produce a model of elementary risks *ER* from the attack paths *AP* at step 150.

For that, the module H uses information about the technical impact of an attack path *AP* evaluated for example by the module G and information stored in the detrimental events and business impact database K, to perform the relation between attack paths with the associated technical impact on the supporting assets, and the detrimental events that affect the primary assets relying on said supporting assets.

Such a relation is defined as an elementary risk *ER,* in other words an elementary risk is a potential attack scenario, which leads to a supporting asset, and consequently affects a primary asset, which therefore induces a detrimental event in the organization.

The module H is able to generate a set of elementary risks *ER.*

The module H may further comprise at least one processing means to calculate the impact of the elementary risk *ER.*

For example, said at least one processing means may be able to cross the technical consequences of the attack path *ImpC, ImpI* and *ImpA* with the nature of the detrimental events *ReqC, ReqI and ReqA,* in order to retain in this example only the detrimental events and attack paths with the same nature of impact.

The module H may further store the elementary risks *ER* for example in an elementary risks database of the device 200 with their associated likelihood for example calculated by the likelihood calculation module F and their associated impact.

Module I: elementary risk database

The device 200 may comprise a module I for storing at step 160 the output of the elementary risk modelling module H. This module I comprises an elementary risks database, a model of which is schematically represented figure 6.

The set of elementary risks *ER* may be stored in this elementary risks database.

Module J: elementary risks susbset instantiation and clustering

The device 200 (figure 10) may further comprise a module J comprising at least one processing means for determining and clustering relevant elementary risks ER regarding one or more criteria *Y* for example selected ou given by the security officer at step 170.

The criteria *Y* may be any information available from the elementary risks *ER* modelled at step 150 for example by the module H and for instance stored in the module I, such as a vulnerability, a critical asset, an entry point, a firewall rule, etc., or any other information which allows to select a subset of all relevant elementary risks *ER*

More particularly, said at least one processing means of module J may comprise means for:

- receiving a single search criterion *Y* or multiple and complex criteria *Y* expressed as a Boolean expression,
- extracting a subset S of relevant elementary risks *ER* regarding criteria *Y* (sub-step 181). Said relevant elementary risks *ER* may be extracted from the elementary risks database K. For any criteria *Y,* an appropriate means can extract all the elementary risks *ER* which are relevant to criteria *Y,* and

- clustering the elementary risks *ER* from the extracted subset S with respect to detrimental events, thus obtaining one cluster $C_1$, $C_2$, ...,$C_N$ per detrimental event $D\_E_1$, $D\_E_2$,...,$D\_E_N$ as schematically illustrated on figure 8 (sub-step 182 represented on figure 7).

Module L: risks modelling

Referring again to figure 10, the device 200 may further comprise a module L for modelling the high level risks also called "composite risks" using the clusters of relevant elementary risks $C_1$, $C_2$,...,$C_N$ defined for example by the module J. A "composite risk" is a high level risk or business risk.

Such composite risk is induced by any criteria *Y*.

The module *L* may comprise at least one processing means to instantiate the composite risk. More particularly, said at least one means to instantiate may comprise means for:

- receiving for example from the module J the elementary risks clusters $C_1$, $C_2$,...,$C_N$,
- for each cluster $C_j$,

  • determining the impact for example as being equal to the impact of the elementary risks *ER* in said cluster $C_j$ thus being equal to the impact of the corresponding detrimental event $D\_E_j$, for example as specified and stored in the detrimental events and business impact database K, and

  • calculating the likelihood $Lj$, for example as the maximum value of likelihood of the attack paths in said cluster $C_j$ or as an average or weighted average, and

- providing a model of the "composite risk" *CR* as the set of the couples of likelihood and impact for all the elementary risks of the extracted subset S relevant to criteria *Y*, according to the following formula:

$CR$ = $\{(L_j, Imp_j)\}_{j \in [1,N]}$ = $\{(L_1, Impact_1)$ ; $(L_2, Impact_2)$ ; ... $(L_j, Impact)$ ; ... ; $(L_N, Impact_N)\}$ wherein $j$ is a natural number from 1 to the number *N* of clusters of relevant elementary risks *ER* regarding criteria *Y*.

The module L may comprise assessing means of the composite risks according to one value, named a "priority metric" $P_j$ derived here depending on the likelihood and impact of the clusters.

The security officer may choose the function to derive the "priority metric" $P_i$ according to the risk management method as used in the organization.

For instance, the "priority metric" $P_i$ may be obtained by combining the likelihood and impact of the clusters. As an example, the likelihood and impact of each cluster may be multiplied or alternatively me be crossed using a two-dimension matrix.

Said assessing means may comprise means for ordering the priority metrics $P_j$, for example ascending or descending, at step 186.

Optionally, the module L may comprise processing means for comparing multiple assessed composite risks with each other. Several comparison methods can be implemented.

Module P: GUI

The device 200 may further comprise a display module P with a user interface such as a graphic user interface GUI for carrying out steps 170 and 190 of the previously described method.

The module P allows the security officer to indicate the composite risks (i.e. business risks) to be calculated by specifying a search criteria *Y* for risk calculation and analysis.

Moreover, the module P allows printing the results of relevant composite risks *CR*, or assessed composite risks *A_CR*, or displaying scores of comparing multiple assessed composite risks *A_CR* to the security officer.

The described embodiment of the device is to be considered only as illustrative and not restrictive.

Of course, the device may include means which could be e.g. hardware means like for instance an ASIC for application-specific integrated circuit, or a combination of hardware and software means, for instance an ASIC and an FPGA for filed-programmable get array, or at least one microprocessor and at least one memory with software modules located therein.

Thus, the means are at least one hardware means and/or software means.

The device may also include only software means.

Alternatively, the invention may be implemented on different hardware devices, e.g. using a plurality of central processing units.

Moreover, in the device said data repository may be in any storage medium such as a CD or disk, memory stick or any kind of memory, e.g. at least one RAM for random-access memory or ROM for read-only memory, or the like, on any combination thereof.

Thus, thanks to the modelling of elementary risks and modelling or assessment of composite risks, the present invention can fill the gap between the technical supervisor with the vision of protection of machines and servers, and high-level business supervisor having to make decisions to protect the high level services of the organization, such as banking services.

The invention allows to automatically evaluate the security state of the ICT system based on questions or needs at high level to prevent a failure in the security at high level such as bank card fraud, etc...

## Claims

1. Programmable device implemented method for calculating and analysing risks in an information system infrastructure of a network, said network comprising a plurality of nodes, said nodes comprising supporting assets on which rely one or more primary assets (10), wherein said method comprises the steps of:

   - generating at least one attack path ($AP$), each generated attack path ($AP$) being a sequence of edges connecting nodes from one entry node ($N_1$) to one exit node ($N_z$), the exit node ($N_z$) being a supporting asset of said system,
   - evaluating the impact of detrimental events ($D\_E$) linked to primary assets (10) which rely on one or more supporting assets,**characterized in that**
   - for each attack path ($AP$), modelling an elementary risk ($ER$) as a potential scenario linking the supporting asset ($N_z$) to which leads the attack path ($AP$) with a primary asset (10) relying on said supporting asset ($N_z$) and one detrimental event ($D\_E$) affecting said primary asset (10),
   - specifying one or more search criteria ($Y, Y_1, Y_2$) for the risk calculation, said criteria ($Y, Y_1, Y_2$) being any information available from information associated to elementary risks ($ER$) or any criteria allowing to select a subset ($S$) of elementary risks ($ER$),
   - selecting one or more elementary risks ($ER$) relevant to the specified criteria ($Y, Y_1, Y_2$), and
   - evaluating a composite risk ($CR$) regarding the specified criteria ($Y, Y_1, Y_2$) based on characteristics of the selected relevant elementary risk(s) ($ER$).

2. Method as set forth in claim 1, comprising a step of calculating the likelihood for each elementary risk ($ER$) based on the likelihood of occurrence ($L$) of the associated attack path ($AP$).

3. Method as set forth in claim 1 or 2, further comprising steps of:

   - determining the nature of the technical impact for each elementary risk ($ER$) based on:

     • the technical impact ($ImpC, ImpI, ImpA$) of the associated attack path ($AP$) corresponding to the nature of the technical consequence relating to the confidentiality, the integrity or the availability of the information system, and on
     • the nature of impact ($ReqC, ReqI, ReqA$) of the associated detrimental event ($D\_E$) relating to the confidentiality, the integrity or the availability of the information system,

   - retaining the elementary risks ($ER$) wherein the technical impact ($ImpC, ImpI, ImpA$) of the associated attack path ($AP$) has the same nature than the impact ($ReqC, ReI, ReqA$) of the associated detrimental event ($D\_E$).

4. Method as set forth in one of the preceding claims, further comprising a step of clustering the selected relevant elementary risk(s) in one cluster ($C_j$) per each detrimental event ($D\_E_j$).

5. Method as set forth in claims 2, 3 and 4,

   - comprising a step of defining for each cluster ($C_j$):

     • the likelihood ($L_j$) based on the likelihood of the elementary risks ($ER$) of the cluster ($C_j$), for example the likelihood ($L_j$) of a cluster ($C_j$) may be the maximum value of the likelihood of an attack path ($AP$) in the cluster ($C_j$), and
     • an impact parameter ($Impact_j$) based on the impact of the associated detrimental event ($D\_E_j$), and

   - wherein the composite risk ($CR$) is defined as the couples of likelihood ($L_j$) and impact parameter ($Impact_j$) of

the clusters ($C_j$) of relevant elementary risks (*ER*).

6. Method as set forth in claim 5, comprising a step of assessing the composite risk (*A_CR*) by computing priority metrics ($P_j$) for each cluster ($C_j$), each priority metric ($P_j$) depending on the likelihood ($L_j$) and impact parameter (*Impact_j*) for the associated cluster ($C_j$).

7. Method as set forth in claim 6, wherein for each cluster ($C_j$) the priority metric ($P_j$) is obtained by combining the likelihood ($L_j$) and impact parameter (*Impact_j*) of the cluster ($C_j$), for example by crossing with two-dimension matrix or by multiplying the likelihood ($L_j$) and impact parameter (*Impact_j*) of the cluster ($C_j$).

8. Method as set forth in claim 6 or 7, wherein the priority metrics ($P_j$) are defined as words.

9. Method as set forth in any one of claim 6 to 8, wherein the priority metrics ($P_j$) may be ordered, for example ascending or descending.

10. Method as set forth in claim 1 or 6, wherein at least two composite risks or assessed composite risks (*A_CR*) may be evaluated according to two different specified criteria ($Y_1$, $Y_2$), said method further comprising a step of comparing the composite risks (*CR*) or assessed composite risks (*A_CR*) with each other in order to prioritize the composite risks (*CR*) or assessed composite risks (*A_CR*).

11. Device (200) for carrying on a method for calculating and analysing risks in an information system infrastructure of a network, said network comprising a plurality of nodes, said nodes comprising supporting assets on which rely one or more primary assets (10), said device comprising at least one processing means for:

    - generating at least one attack path (*AP*), each generated attack path (*AP*) being a sequence of edges connecting nodes from one entry node ($N_1$) to one exit node ($N_z$), the exit node ($N_z$) being a supporting asset of said system,
    - evaluating the impact of detrimental events (*D_E*) linked to primary assets (10) which rely on one or more supporting assets,**characterized in that** said device further comprises at least one processing means for:
    - modelling for each attack path (*AP*) an elementary risk (*ER*) as a potential scenario linking the supporting asset ($N_z$) to which leads the attack path (*AP*) with a primary asset (10) relying on said supporting asset ($N_z$) and one detrimental event (*D_E*) affecting said primary asset (10),
    - specifying one or more search criteria ($Y$, $Y_1$, $Y_2$) for the risk calculation, said criteria ($Y$, $Y_1$, $Y_2$) being any information available from information associated to elementary risks (*ER*) or any criteria allowing to select a subset (*S*) of elementary risks (*ER*),
    - selecting one or more elementary risks (*ER*) relevant to the specified criteria ($Y$, $Y_1$, $Y_2$), and
    - evaluating a composite risk (*CR*) regarding the specified criteria ($Y$, $Y_1$, $Y_2$) based on characteristics of the selected relevant elementary risk(s) (*ER*).

12. Device as set forth in the claim 11, comprising an attack graph generation module (C) for generating an attack graph based on specified entry nodes ($N_1$) and exit nodes ($N_z$) and an attack graph dissociation module (D) able to dissociate the attack graph generated by the module (C) into one or more attack paths (*AP*).

13. Device as set fort in claim 11 or 12, comprising at least one processing means for calculating the likelihood occurrence of each attack path (*AP*).

14. Device as set forth in claim 13, wherein said at least one processing means for calculating the likelihood occurrence of each attack path (*AP*) is able to calculate the likelihood of occurrence of each elementary risk (*ER*).

15. Device as set forth in any one of claims 11 to 14, comprising at least one processing means for evaluating the technical impact incurred at the exit node ($N_z$) of an attack path (*AP*) according to consequences on the exit node ($N_z$) relating to the confidentiality, the integrity or the availability of the system.

16. Device as set forth in claim 15, said at least one processing means for modelling for each attack path (*AP*) an elementary risk (*ER*) is able to determine at least one impact parameter of the elementary risk (*ER*) based on the technical impact of the associated attack path (*AP*) and on the impact of the associated detrimental event (*D_E*).

17. Device as set forth in any one of claims 11 to 16, comprising at least one processing means for clustering the relevant elementary risks (*ER*) regarding specified criteria ($Y$, $Y_1$, $Y_2$) according to the detrimental events (*D_E*).

**18.** Device as set forth in claims 14, 16 and 17 taken in combination, comprising at least one processing means for assessing the composite risks ($CR$) by computing priority metrics ($P_j$) for each cluster ($C_j$), each priority metric ($P_j$) depending on the likelihood ($L_j$) and impact parameter ($Impact_j$) for the associated cluster ($C_j$), for example by combining the likelihood ($L_j$) and impact parameter ($Impact_j$) of the cluster ($C_j$).

**Patentansprüche**

**1.** In einer programmierbaren Vorrichtung implementiertes Verfahren zum Berechnen und Analysieren von Risiken in einer Informationssysteminfrastruktur eines Netzwerks, wobei besagtes Netzwerk umfasst eine Vielzahl von Knoten, wobei besagte Knoten unterstützende Assets umfassen, von den ein oder mehrere primäre Assets (10) abhängen, wobei besagtes Verfahren die folgenden Schritte umfasst:

- Erzeugen mindestens eines Angriffspfads ($AP$), wobei jeder erzeugte Angriffspfad ($AP$) eine Sequenz von Knoten verbindenden Ecken von einem Eingangsknoten ($N_1$) zu einem Ausgangsknoten ($N_z$) ist, wobei der Ausgangsknoten ($N_z$) ein unterstützendes Asset besagten Systems ist,
- Bewerten der Auswirkung schädlicher Ereignisse ($D\_E$), die mit primären Assets (10) verbunden sind, welche abhängig sind von einem oder mehreren unterstützenden Assets abhängen, **dadurch gekennzeichnet, dass**
- für jeden Angriffspfad ($AP$), eine Modellierung eines elementaren Risikos ($ER$) als potenzielles Szenarium durchgeführt wird, das das unterstützende Asset ($N_z$), zu dem der Angriffspfad ($AP$) führt, mit einem primären Asset (10) verbindet, das von besagtem unterstützenden Asset ($N_z$) und von einem schädlichen Ereignis ($D\_E$) abhängt und besagtes primäre Asset (10) beeinträchtigt,
- Spezifizieren eines oder mehrerer Suchkriterien ($Y, Y_1, Y_2$) für die Risikoberechnung, wobei besagte Kriterien ($Y, Y_1, Y_2$) jegliche Information darstellen, die verfügbar ist aus der Information, die verbunden ist mit elementaren Risiken ($ER$), oder beliebige Kriterien, die es gestatten, einen Untersatz ($S$) elementarer Risiken ($ER$) auszuwählen,
- Auswählen eines oder mehrerer elementarer Risiken ($ER$), die relevant sind für die spezifizierten Risiken ($Y, Y_1, Y_2$), und
- Bewerten eines zusammengesetzten Risikos ($CR$) hinsichtlich der spezifizierten Kriterien ($Y, Y_1, Y_2$) auf Grundlage von Eigenschaften des/der ausgewählten elementaren Kriteriums/Kriterien ($ER$).

**2.** Verfahren nach Anspruch 1, umfassend einen Schritt des Berechnens der Wahrscheinlichkeit eines jeden elementaren Risikos ($ER$) auf Grundlage der Wahrscheinlichkeit des Auftretens ($L$) des verbundenen Angriffspfads ($AP$).

**3.** Verfahren nach Anspruch 1 oder 2, weiterhin umfassend die folgenden Schritte:

- Bestimmen der Natur der technischen Auswirkung für jedes elementare Risiko ($ER$) auf Grundlage von:

• der technischen Auswirkung ($ImpC, ImpI, ImpA$) des verbundenen Angriffspfads ($AP$) entsprechend der Natur der technischen Folge hinsichtlich der Vertraulichkeit, Integrität oder Verfügbarkeit des Informationssystems, und von
• der Natur der Auswirkung ($ReqC, ReqI, ReqA$) des verbundenen schädlichen Ereignisses ($D\_E$) hinsichtlich der Vertraulichkeit, der Integrität oder der Verfügbarkeit des Informationssystems,

- Zurückhalten der elementaren Risiken ($ER$), wobei die technische Auswirkung ($ImpC, ImpI, ImpA$) des verbundenen Angriffspfads ($AP$) dieselbe Natur hat wie die Auswirkung ($ReqC, ReI, ReqA$) des verbundenen schädlichen Ereignisses ($D\_E$).

**4.** Verfahren nach einem der vorhergehenden Ansprüche, weiterhin umfassend einen Schritt des Clusterns des/der ausgewählten relevanten elementaren Risikos/Risiken in einem Cluster ($C_j$) pro jedem schädlichen Ereignis ($D\_E_j$).

**5.** Verfahren nach den Ansprüchen 2, 3 und 4,

- umfassend einen Schritt des Definierens eines jeden Clusters ($C_j$):

• der Wahrscheinlichkeit ($L_j$) auf Grundlage der Wahrscheinlichkeit der elementaren Risiken ($ER$) des Clusters ($C_j$), zum Beispiel kann die Wahrscheinlichkeit ($L_j$) eines Clusters ($C_j$) der Maximalwert der Wahrscheinlichkeit eines Angriffspfads ($AP$) in dem Cluster ($C_j$) sein, und

• eines Auswirkungsparameters (*Impact$_j$*) auf Grundlage des verbundenen schädlichen Ereignisses (*D_E$_j$*), und

- wobei das zusammengesetzte Risiko (*CR*) definiert ist als die Paare von Wahrscheinlichkeiten (*L$_j$*) und Auswirkungsparametern (*Impact$_j$*) der Cluster (*C$_j$*) der relevanten elementaren Risiken (*ER*).

6. Verfahren nach Anspruch 5, umfassend einen Schritt des Bewertens des zusammengesetzten Risikos (*A_CR*) durch Berechnen von Prioritätsmetriken (*P$_j$*) für jeden Cluster (*C$_j$*), wobei jede Prioritätsmetrik (*P$_j$*) abhängt von der Wahrscheinlichkeit (*L$_j$*) und einem Auswirkungsparameter (*Impact$_j$*) für den verbundenen Cluster (*C$_j$*).

7. Verfahren nach Anspruch 6, wobei für jeden Cluster (*C$_j$*) die Prioritätsmetrik (*P$_j$*) erhalten wird durch Kombinieren der Wahrscheinlichkeit (*L$_j$*) und des Auswirkungsparameters (*Impact$_j$*) des Clusters (*C$_j$*), zum Beispiel durch Querkombinieren mit einer zweidimensionalen Matrix oder durch Multiplizieren der Wahrscheinlichkeit (*L$_j$*) mit dem Auswirkungsparameter (*Impact$_j$*) des Clusters (*C$_j$*).

8. Verfahren nach Anspruch 6 oder 7, wobei die Prioritätsmetriken (*P$_j$*) als Worte definiert sind.

9. Verfahren nach einem beliebigen der Ansprüche 6 bis 8, wobei die Prioritätsmetriken (*P$_j$*) geordnet sein können, zum Beispiel aufsteigend oder absteigend.

10. Verfahren nach Anspruch 1 oder 6, wobei mindestens zwei zusammengesetzte Risiken oder bewertete zusammengesetzte Risiken (*A_CR*) bewertet werden können gemäß zwei verschiedenen spezifizierten Kriterien (*Y$_1$, Y$_2$*), wobei besagtes Verfahren weiterhin umfasst einen Schritt des Vergleichens der zusammengesetzten Risiken (*CR*) oder der bewerteten zusammengesetzten Risiken (*A_CR*) miteinander, um die zusammengesetzten Risiken (*CR*) oder die bewerteten zusammengesetzten Risiken (*A_CR*) zu priorisieren.

11. Vorrichtung (200) zum Tragen eines Verfahrens zum Berechnen und Analysieren von Risiken in einer Informationssysteminfrastruktur eines Netzwerks, wobei besagtes Netzwerk umfasst eine Vielzahl von Knoten, wobei besagte Knoten unterstützende Assets umfassen, von denen ein oder mehrere primäre Assets (10) abhängen, wobei besagte Vorrichtung mindestens ein Verarbeitungsmittel umfasst zum:

- Erzeugen mindestens eines Angriffspfads (*AP*), wobei jeder erzeugte Angriffspfad (*AP*) eine Sequenz von Knoten verbindenden Ecken von einem Eingangsknoten (*N$_1$*) zu einem Ausgangsknoten (*N$_z$*) ist, wobei der Ausgangsknoten (*N$_z$*) ein unterstützendes Asses besagten Systems ist,
- Bewerten der Auswirkung schädlicher Ereignisse (*D_E*), die mit primären Assets (10) verbunden sind, welche abhängig sind von einem oder mehreren unterstützenden Assets, **dadurch gekennzeichnet, dass** besagte Vorrichtung weiterhin umfasst mindestens ein Verarbeitungsmittel zum:
- Modellieren für jeden Angriffspfad (*AP*) eines elementaren Risikos (*ER*) als potenzielles Szenarium, das das unterstützende Asset (*N$_z$*), zu dem der Angriffspfad (*AP*) führt, mit einem primären Asset (10) verbindet, das von besagtem unterstützenden Asset (*N$_z$*) und von einem schädlichen Ereignis (*D_E*) abhängt und besagtes primäre Asset (10) beeinträchtigt,
- Spezifizieren eines oder mehrerer Suchkriterien (*Y, Y$_1$, Y$_2$*) für die Risikoberechnung, wobei besagte Kriterien (*Y, Y$_1$, Y$_2$*) jegliche Information darstellen, die verfügbar ist aus der Information, die verbunden ist mit elementaren Risiken (*ER*), oder beliebige Kriterien, die es gestatten, einen Untersatz (*S*) elementarer Risiken (*ER*) auszuwählen,
- Auswählen eines oder mehrerer elementarer Risiken (*ER*), die relevant sind für die spezifizierten Risiken (*Y, Y$_1$, Y$_2$*), und
- Bewerten eines zusammengesetzten Risikos (*CR*) hinsichtlich der spezifizierten Kriterien (*Y, Y$_1$, Y$_2$*) auf Grundlage von Eigenschaften des/der ausgewählten elementaren Kriteriums/Kriterien (*ER*).

12. Vorrichtung nach Anspruch 11, umfassend eine Angriffsgrapherzeugungsmodul (*C*) zum Erzeugen eines Angriffsgraphen auf Grundlage spezifizierter Eingangsknoten (*N$_1$*) und Ausgangsknoten (*N$_z$*) und ein Angriffsgraphtrennmodul (*D*), das in der Lage ist, den von dem Modul (*C*) erzeugten Angriffsgraphen in einem oder mehrere Angriffspfade (*AP*) zu trennen.

13. Vorrichtung nach Anspruch 11 oder 12, umfassend mindestens ein Verarbeitungsmittel zum Berechnen der Wahrscheinlichkeit des Auftretens eines jeden Angriffspfads (*AP*).

**14.** Vorrichtung nach Anspruch 13, wobei besagtes mindestens eine Verarbeitungsmittel zum Berechnen der Wahrscheinlichkeit des Auftretens eines jeden Angriffspfads (*AP*) in der Lage ist, die Wahrscheinlichkeit des Auftretens eines jeden elementaren Risikos (*ER*) zu berechnen.

**15.** Vorrichtung nach einem beliebigen der Ansprüche 11 bis 14, umfassend mindestens ein Verarbeitungsmittel zum Bewerten der technischen Auswirkung, die an dem Ausgangsknoten ($N_z$) eines Angriffspfads (*AP*) auftritt gemäß den Folgen an dem Ausgangsknoten ($N_z$) hinsichtlich der Vertraulichkeit, der Integrität bzw. der Verfügbarkeit des Systems.

**16.** Vorrichtung nach Anspruch 15, wobei besagtes mindestens eine Verarbeitungsmittel zum Modellieren eines jeden Angriffspfads (*AP*) eines elementaren Risikos (*ER*) in der Lage ist, mindestens einen Auswirkungsparameter des elementaren Risikos (*ER*) zu bestimmen auf Grundlage der technischen Auswirkung des verbundenen Angriffspfads *(AP)* und der Auswirkung des verbundenen schädlichen Ereignisses (*D_E*).

**17.** Vorrichtung nach einem beliebigen der Ansprüche 11 bis 16, umfassend mindestens ein Verarbeitungsmittel zum Clustern der relevanten elementaren Risiken (ER) hinsichtlich spezifizierter Kriterien (*Y, $Y_1$, $Y_2$*) gemäß den schädlichen Ereignissen (*D_E*).

**18.** Vorrichtung nach den Ansprüchen 14, 16 und 17 in Kombination, umfassend mindestens ein Verarbeitungsmittel zum Bewerten der zusammengesetzten Risiken (CR) durch Berechnen der Prioritätsmetriken ($P_j$) für jeden Cluster ($C_j$), wobei jede Prioritätsmetrik ($P_j$) abhängt von der Wahrscheinlichkeit ($L_j$) und dem Auswirkungsparameter (*$Impact_j$*) für den verbundenen Cluster ($C_j$), zum Beispiel durch Kombinieren der Wahrscheinlichkeit ($L_j$) und des Auswirkungsparameters (*$Impact_j$*) des Clusters ($C_j$).

**Revendications**

**1.** Procédé implémenté dans un dispositif programmable destiné à calculer et analyser des risques dans une infrastructure de système d'information d'un réseau, ledit réseau comprenant une pluralité de noeuds, lesdits noeuds comprenant des actifs de soutien desquels dépendent un ou plusieurs actifs principaux (10), ledit procédé comprenant les étapes suivantes :

- générer au moins un chemin d'attaque (*AP*), chaque chemin d'attaque (*AP*) généré étant une séquence d'arcs connectant des noeuds depuis un noeud d'entrée ($N_1$) jusqu'à un noeud de sortie ($N_z$), le noeud de sortie ($N_z$) étant un actif de soutien dudit système,
- évaluer l'impact d'événements préjudiciables (*D_E*) liés aux actifs principaux (10) qui dépendent d'un ou plusieurs actifs de soutien, caractérisé selon ce qui suit
- pour chaque chemin d'attaque (*AP*), modéliser un risque élémentaire (*ER*) sous forme de scénario potentiel reliant l'actif de soutien ($N_z$) auquel mène le chemin d'attaque (*AP*) à un actif principal (10) dépendant dudit actif de soutien ($N_z$) et un événement préjudiciable (*D_E*) affectant ledit actif principal (10),
- spécifier un ou plusieurs critères de recherche (*Y, $Y_1$, $Y_2$*) pour le calcul du risque, lesdits critères (*Y, $Y_1$, $Y_2$*) étant des informations quelconques disponibles parmi les informations associées aux risques élémentaires (*ER*) ou des critères quelconques permettant de sélectionner un sous-ensemble (S) de risques élémentaires (*ER*),
- sélectionner un ou plusieurs risques élémentaires (*ER*) pertinents pour les critères spécifiés (*Y, $Y_1$, $Y_2$*) ; et
- évaluer un risque composite (*CR*) concernant les critères spécifiés (*Y, $Y_1$, $Y_2$*) en fonction des caractéristiques des risques élémentaires (*ER*) pertinents sélectionnés.

**2.** Procédé selon la revendication 1, comprenant une étape de calcul de la probabilité pour chaque risque élémentaire (*ER*) en fonction de la probabilité d'occurrence (L) du chemin d'attaque (*AP*) associé.

**3.** Procédé selon la revendication 1 ou 2, comprenant en outre les étapes suivantes :

- déterminer la nature de l'impact technique pour chaque risque élémentaire (*ER*) en fonction :

• de l'impact technique (*ImpC, ImpI, ImpA*) du chemin d'attaque (*AP*) associé correspondant à la nature de la conséquence technique concernant la confidentialité, l'intégrité ou la disponibilité du système d'information, et

• de la nature de l'impact (*ReqC, ReqI, ReqA*) de l'événement préjudiciable (*D_E*) associé concernant la confidentialité, l'intégrité ou la disponibilité du système d'information,

- retenir les risques élémentaires (*ER*) pour lesquels l'impact technique (*ImpC, ImpI, ImpA*) du chemin d'attaque (*AP*) associé est de même nature que l'impact (*ReqC, ReqI, ReqA*) de l'événement préjudiciable (*D_E*) associé.

**4.** Procédé selon l'une des revendications précédentes, comprenant en outre une étape de regroupement des risques élémentaires pertinents sélectionnés dans un groupe ($C_j$) pour chaque événement préjudiciable ($D\_E_j$).

**5.** Procédé selon les revendications 2, 3 et 4,

- comprenant une étape de définition pour chaque groupe ($C_j$) :

• de la probabilité ($L_j$) basée sur la probabilité des risques élémentaires (ER) du groupe ($C_j$), par exemple la probabilité ($L_j$) d'un groupe ($C_j$) peut être la valeur maximale de la probabilité d'un chemin d'attaque (*AP*) dans le groupe ($C_j$), et
• d'un paramètre d'impact (*Impact$_j$*) basé sur l'impact de l'événement préjudiciable ($D\_E_j$) associé, et

- dans lequel le risque composite (CR) est défini comme les couples de probabilité ($L_j$) et de paramètre d'impact (*Impact$_j$*) des groupes ($C_j$) des risques élémentaires (ER) pertinents.

**6.** Procédé selon la revendication 5, comprenant une étape d'évaluation du risque composite *(A_CR)* en calculant des métriques de priorité ($P_j$) pour chaque groupe ($C_j$), chaque métrique de priorité ($P_j$) dépendant de la probabilité ($L_j$) et du paramètre d'impact (*Impact$_j$*) pour le groupe ($C_j$) associé.

**7.** Procédé selon la revendication 6, dans lequel pour chaque groupe ($C_j$) la métrique de priorité ($P_j$) est obtenue en combinant la probabilité ($L_j$) et le paramètre d'impact (*Impact$_j$*) du groupe ($C_j$), par exemple en effectuant un croisement avec une matrice à deux dimensions ou en multipliant la probabilité ($L_j$) et le paramètre d'impact (*Impact$_j$*) du groupe ($C_j$).

**8.** Procédé selon la revendication 6 ou 7, dans lequel les métriques de priorité ($P_j$) sont définies en tant que mots.

**9.** Procédé selon l'une quelconque des revendications 6 à 8, dans lequel les métriques de priorité ($P_j$) peuvent être triées, par exemple par ordre croissant ou décroissant.

**10.** Procédé selon la revendication 1 ou 6, dans lequel au moins deux risques composites ou risques composites évalués (*A_CR*) peuvent être évalués selon deux critères spécifiés différents ($Y_1, Y_2$), ledit procédé comprenant en outre une étape de comparaison des risques composites (CR) ou des risques composites évalués (*A_CR*) les uns par rapport aux autres afin de définir une priorité pour les risques composites (*CR*) ou les risques composites évalués (*A_CR*).

**11.** Dispositif (200) destiné à exploiter un procédé de calcul et d'analyse des risques dans une infrastructure de système d'information d'un réseau, ledit réseau comprenant une pluralité de noeuds, lesdits noeuds comprenant des actifs de soutien desquels dépendent un ou plusieurs actifs principaux (10), ledit dispositif comprenant au moins un moyen de traitement pour :

- générer au moins un chemin d'attaque (*AP*), chaque chemin d'attaque (*AP*) généré étant une séquence d'arcs connectant des noeuds depuis un noeud d'entrée ($N_1$) jusqu'à un noeud de sortie ($N_z$), le noeud de sortie ($N_z$) étant un actif de soutien dudit système,
- évaluer l'impact d'événements préjudiciables (*D_E*) liés aux actifs principaux (10) qui dépendent d'un ou plusieurs actifs de soutien, **caractérisé en ce que** ledit dispositif comprend en outre un moyen de traitement pour :
- modéliser pour chaque chemin d'attaque (*AP*) un risque élémentaire (*ER*) sous forme de scénario potentiel reliant l'actif de soutien ($N_z$) auquel mène le chemin d'attaque (*AP*) à un actif principal (10) dépendant dudit actif de soutien ($N_z$) et un événement préjudiciable (*D_E*) affectant ledit actif principal (10),
- spécifier un ou plusieurs critères de recherche (*Y, $Y_1$, $Y_2$*) pour le calcul du risque, lesdits critères (*Y, $Y_1$, $Y_2$*) étant des informations quelconques disponibles parmi les informations associées aux risques élémentaires (*ER*) ou des critères quelconques permettant de sélectionner un sous-ensemble (*S*) de risques élémentaires (*ER*),

- sélectionner un ou plusieurs risques élémentaires (*ER*) pertinents pour les critères spécifiés (*Y, Y₁, Y₂*) ; et

- évaluer un risque composite (*CR*) concernant les critères spécifiés *(Y, Y₁, Y₂)* en fonction des caractéristiques des risques élémentaires (*ER*) pertinents sélectionnés.

12. Dispositif selon la revendication 11, comprenant un module de génération de graphe d'attaque (C) destiné à générer un graphe d'attaque en fonction de noeuds d'entrée ($N_1$) et de noeuds de sortie ($N_z$) spécifiés et un module de dissociation de graphe d'attaque (D) capable de dissocier le graphe d'attaque généré par le module (C) en un ou plusieurs chemins d'attaque *(AP)*.

13. Dispositif selon la revendication 11 ou 12, comprenant au moins un moyen de traitement destiné à calculer la probabilité d'occurrence de chaque chemin d'attaque *(AP)*.

14. Dispositif selon la revendication 13, dans lequel ledit ou lesdits moyens de traitement destinés à calculer la probabilité d'occurrence de chaque chemin d'attaque (*AP*) sont capables de calculer la probabilité d'occurrence de chaque risque élémentaire (*ER*).

15. Dispositif selon l'une quelconque des revendications 11 à 14, comprenant au moins un moyen de traitement destiné à évaluer l'impact technique occasionné au niveau du noeud de sortie ($N_z$) d'un chemin d'attaque (*AP*) selon les conséquences sur le noeud de sortie ($N_z$) concernant la confidentialité, l'intégrité ou la disponibilité du système.

16. Dispositif selon la revendication 15, dans lequel ledit ou lesdits moyens de traitement destinés à modéliser pour chaque chemin d'attaque (*AP*) un risque élémentaire (*ER*) sont capables de déterminer au moins un paramètre d'impact du risque élémentaire (*ER*) en fonction de l'impact technique du chemin d'attaque (*AP*) associé et de l'impact de l'événement préjudiciable (*D_E*) associé.

17. Dispositif selon l'une quelconque des revendications 11 à 16, comprenant au moins un moyen de traitement destiné à regrouper les risques élémentaires (*ER*) pertinents concernant des critères spécifiés (*Y, Y₁, Y₂*) selon les événements préjudiciables (*D_E*).

18. Dispositif selon les revendications 14, 16 et 17 considérées de manière combinée, comprenant au moins un moyen de traitement destiné à évaluer les risques composites (CR) en calculant des métriques de priorité ($P_j$) pour chaque groupe ($C_j$), chaque métrique de priorité ($P_j$) dépendant de la probabilité ($L_j$) et du paramètre d'impact ($Impact_j$) pour le groupe ($C_j$) associé, par exemple en combinant la probabilité ($L_j$) et le paramètre d'impact ($Impact_j$) du groupe ($C_j$).

**Fig.1**

100

↓ AP

110

120

L

130

ImpC, ImpI, ImpA

140

ReqC, ReqI, ReqA

150

↓ ER

160

170

↓ Y

180

↓ A_CR

190

AP

**Fig.2**

| SrcIP | | DstIP | SrcIP | | DstIP | SrcIP | | DstIP |
| SrcPort | | DstPort | SrcPort | | DstPort | SrcPort | | DstPort |
| V | | V | | | V | | | V |

$N_1$  $N_2$  - - - $N_i$  $N_Z$

**Fig.3**

$$L = -20\log 10(\,(X - Xmin)/X\,)$$

**Fig.4**

**Fig.5**

**Fig.6**

180

Y

181

S

**Fig.7**

182

$C_1, C_2, ..., C_N$

183

$\forall\ C_j\ (L_j, Impact_j)$

184

$CR = \{\ (L_j, Impact_j)\ \}_{j \in [1,N]}$

185

$A\_CR = \{P_j\}_{j \in [1,N]}$

186

$A\_CR = \{P_1, P_2, ..., P_N\}$

## Fig.8

$N_Z$     $C_1$

| AP | * 1 | V |  | * * | 10 | * 1 | D_E₁ | ER |

AP

V

ImpC | ImpI | ImpA

10

$D\_E_1$

ReqC | ReqI | ReqA

20

$C_2$

AP

V

ImpC | ImpI | ImpA

10

$D\_E_2$

ReqC | ReqI | ReqA

20

ER

$N_Z$

$C_N$

AP

V

ImpC | ImpI | ImpA

10

$D\_E_N$

ReqC | ReqI | ReqA

20

ER

## Fig.9

$Y_1$ → 180

180 ← $Y_2$

$A\_CR_1$

$A\_CR_2$

187

**Fig.10**

**REFERENCES CITED IN THE DESCRIPTION**

**Patent documents cited in the description**

- EP 1768043 A

- US 2009077666 A